# EUROPÄISCHE PATENTANMELDUNG

(11) **EP 2 597 662 A1**
(43) Veröffentlichungstag der Anmeldung: **29.05.2013**
(21) Anmeldenummer: 11190867.9
(22) Anmeldetag: 28.11.2011
(51) Int. Cl.: H01H 3/40, H01H 31/00, H01H 31/32, H02B 13/035

(54) **Erdschalter für gasisolierte Mittel- oder Hochspannungsanlage**

(71) Anmelder: ABB Technology AG, 8050 Zürich (CH)
(72) Erfinder: Zwicky, Daniel, CH-5443 Niederrohrdorf (CH); Saxl, David, 8046 Zürich (CH)
(74) Vertreter: ABB Patent Attorneys

(57) **Zusammenfassung**

Die Erfindung betrifft einen Erdschalter (100) für eine Mittel- oder Hochspannungsschaltanlage umfassend: ein Gehäuse (110), welches ein Innenvolumen (112) definiert, einen stationären Kontaktabschnitt (120), der mit einem Nominalleiter (122) der Mittel- und/oder Hochspannungsanlage elektrisch in Verbindung steht, einin dem Innenvolumen bewegliches Kontaktelement (130), und einen Spindelantrieb (140), der eine mit dem Kontaktelement zusammenwirkende Gewindespindel (142) aus Metall umfasst, um das Kontaktelement in Richtung einer Längsachse (X) zwischen einer ersten Position, in der das Kontaktelement den stationären Kontaktabschnitt kontaktiert, und zweiten Position zu bewegen, in der das Kontaktelement entfernt von dem stationären Kontaktabschnitt angeordnet ist.

## Beschreibung

Die Erfindung betrifft einen Erdschalter für eine Mittel- oder Hochspannungsanlage umfassend ein Gehäuse, welches ein Innenvolumen definiert.

Aus EP 1569255 A1 ist ein kompaktes Erderschaltgerät für gasisolierte Schaltanlagen bekannt. Das Erderschaltgerät weist einen Erderfestkontakt auf, der an einer Innenseite eines Montagedeckels montiert ist. Das Erderschaltgerät weist einen beweglichen Erderkontakt auf, der über eine Spindel bewegt wird, und wahlweise mit einem Stromleiter oder einem Erderfestkontakt elektrisch in Verbindung gebracht werden kann.

Aus EP 2051272 A1 ist ein kombinierter schnell- und langsamer Erder bekannt. Der Erdschalter weist drei Elektroden auf, die wahlweise über ein mobiles Element paarweise verbunden werden können. Das mobile Element weist dabei einen inneren Leiter und einen äußeren Leiter auf. Dabei sind der innere und äußere Leiter über einen Ring in elektrischem Kontakt. Der innere und der äußere Leiter können unabhängig voneinander oder gemeinsam bewegt werden. Der äußere Leiter wird dabei über ein Zahnrad und ein Zahnstange bewegt. Zudem ist eine Feder integriert, die gespannt werden kann, um den inneren Leiter schnell bewegen zu können. Der in EP 2051272 A1 beschriebene Erdschalter weist einen großen Bauraum und einen komplizierten Antriebsmechanismus auf, der in dem Gasraum angeordnet ist.

Ferner gibt es Schnellerder, die bei gasisolierten Schaltern angewendet werden, und ein Schaltelement aufweisen, das über eine bistabile Feder angetrieben werden. Diese Erdschalter weisen viele Teile auf und brauchen einen großen Bauraum.

Aufgabe der Erfindung ist es daher, den gattungsgemäßen Erdschalter derart weiterzuentwickeln, dass er die Nachteile des Stands der Technik überwindet, insbesondere günstiger herzustellen und einen geringeren Wartungsaufwand aufweist.

Diese Aufgabe wird erfindungsgemäß durch einen Erdschalter für eine gasisolierten Mittel-oder Hochspannungsschaltanlage gelöst, umfassend: ein Gehäuse, welches ein Innenvolumen definiert, einen Nominalleiter, welcher einen stationären Kontaktabschnitt (Festkontakt) aufweist und mit diesem elektrisch in Verbindung steht, ein in dem Innenvolumen (z.B. linear) bewegliches Kontaktelement, und einen Spindelantrieb, der eine mit dem beweglichen Kontaktelement zusammenwirkende Gewindespindel aus Metall umfasst, um das bewegliche Kontaktelement (z.B. linear) in Richtung einer Längsachse zwischen einer ersten Position und einer zweiten Position zu bewegen, und umgekehrt. In der ersten Position ist das bewegliche Kontaktelement mit dem stationären Kontaktabschnitt elektrisch verbunden/kontaktiert, während das bewegliche Kontaktelement in der zweiten Position um eine Isolierdistanz vom stationären Kontaktabschnitt getrennt und örtlich entfernt angeordnet ist.

Der stationäre Kontaktabschnitt ist in eingeschaltetem Zustand des Erdschalters über das Kontaktelement mit dem Gehäuse verbindbar. Im eingeschalteten (geschlossenem) Zustand des Erdschalters ist das bewegliche Kontaktelement elektrisch mit dem Nominalleiter verbunden. Wenn das Gehäuse elektrisch auf Erdpotential (Masse) liegt, ist der Nominalleiter so über das Kontaktelement mit dem Gehäuse verbindbar, dass er elektrisch geerdet ist. Da das bewegliche Kontaktelement gehäuseseitig angeordnet ist, kann das bewegliche Kontaktelement auch als erdseitiger beziehungsweise erdpotentialseitiger Kontakt , oder als elektrisch masseseitiger Kontakt bezeichnet werden, wenn das Gehäuse elektrisch auf Erdpotential liegt und das bewegliche Kontaktelement mit dem Gehäuse elektrisch leitend verbunden ist.

Unter Hochspannung wird insbesondere eine Spannung von über 30kV, insbesondere über 50kV verstanden. Unter einer Mittelspannung wird insbesondere eine Spannung zwischen 1kV und 50kV Volt, insbesondere zwischen 3kV und 30kV Volt verstanden.

Der erfindungsgemäße Erdschalter weist wenige Teile auf, von denen einige gleichzeitig mehrere Aufgaben übernehmen können. Beispielsweise kann das Gehäuse einen Montageflansch, eine Führung für das Kontaktelement und einen Halter für die Abschirmung, einen Halter für eine O-Ringdichtung zum Flansch und/oder einen Spindelraum für eine Spindel bereitstellen. Somit können mehrere Elemente wirtschaftlich vereint werden, ohne Abstriche bei der guten Zugänglichkeit zum Schaltelement bzw. Kontaktelement machen zu müssen. Zudem liegt das Schaltelement und der Spindelantrieb gänzlich auf Erdpotentialseite, sodass die Gewindespindel nicht aus Isolationsmaterial hergestellt sein muss, was den Spindelantrieb vereinfacht. Eine metallische Spindel hat eine gute mechanische Festigkeit beziehungsweise Dauerfestigkeit und eine gute elektrische Leitfähigkeit und ist kostengünstig. Zudem weist der erfindungsgemäße Erdschalter eine gute Zugänglichkeit zum Schaltelement zwecks Wartung auf und lässt sich einfach bedienen, da über einen Standardantrieb die Spindel bewegt werden kann, an dessen Ausgang ein bestimmtes Drehmoment anliegt, sowie durch eine definierte Anzahl von Umdrehungen die Spindel angetrieben wird.

In einer Ausführungsform kann der Spindelantrieb einen Führungskörper aufweisen, der mit dem Kontaktelement derart zusammenwirkt, dass eine Drehbewegung des Kontaktelements relativ zum Führungskörpers vermieden wird, insbesondere über eine Nut-Stift-Anordnung, wobei vorzugsweise der Führungskörper die Nut aufweist. Dabei kann in einer Ausführungsform der Stift an dem erdpotentialseitigen Ende des Kontaktelements angeordnet sein.

In einer Ausführungsform kann der Führungskörper ortsfest angeordnet sein und/oder im eingeschalteten (geschlossenen) Zustand des Erdschalters mit dem elektrischen Potential des Gehäuses elektrisch in Verbindung stehen, beispielsweise auf Erdpotential. Beispielsweise kann der Führungskörper mit dem Gehäuse elektrisch in Verbindung stehen. Dies kann in einer Ausführungsform über eine lösbare elektrische Verbindung realisiert werden.

Dabei kann der Führungskörper an einem Abschnitt des Gehäuses fixiert sein und/oder einen Abschnitt des Gehäuses bereitstellt. Folglich kann durch ein Bauteil sowohl ein Abschnitt eines Gehäuses als auch der Führungskörper realisiert werden. Dies kann die Wartung und Konstruktion des Erdschalters vereinfachen. So kann das Gehäuse beispielsweise eine Öffnung aufweisen, in die der Führungskörper eingesetzt und durch diesen verschlossen wird.

In einer Ausführungsform kann der Führungskörper eine Befestigungsfläche, insbesondere in Form eines Befestigungsflansches, aufweisen, wobei zwischen der Befestigungsfläche und dem Abschnitt des Gehäuses eine Isolierschicht angeordnet ist. Somit kann der Führungskörper ein elektrisches Potential aufweisen, dass unterschiedlich ist zu dem Gehäuse, falls keine elektrische Verbindung dazwischen bereitgestellt wird. Somit können z.B. Spannungsfallmessungen durchgeführt werden.

Eine Ausführungsform kann dadurch gekennzeichnet sein, dass der Spindelantrieb teilweise außerhalb des Innenvolumens angeordnet ist. Dabei kann der Spindelantrieb ein Getriebe aufweisen, wobei das Getriebe außerhalb des Innenvolumens angeordnet ist. Dadurch sind sensible Teile des Antriebs, die sich Abnutzen oder Dejustieren können, wie beispielsweise das Getriebe, außerhalb des Gasraums für Wartungspersonal zugänglich.

Beispielsweise kann eine Ausführungsform dadurch gekennzeichnet sein, dass der Führungskörper und/oder das Kontaktelement die Gewindespindel umgeben, insbesondere zylinderförmig umgeben. Dabei kann in einer Ausführungsform, die mit anderen Ausführungsformen kombiniert werden kann, die Gewindespindel, insbesondere deren festkontaktseitiges Ende (d.h. das dem stationären Kontaktabschnitt näher gelegene Ende, auch als bzw. stationärkontaktseitiges Ende bezeichnet), vom Gehäuse her in Richtung der Längsachse im Wesentlichen die gleiche oder eine größere Länge aufweisen wie das dem stationären Kontaktabschnitt zugewandte Ende des Führungskörpers.

In einer Ausführungsform, die mit anderen Ausführungsformen kombinierbar ist, kann das bewegliche Kontaktelement und der Führungskörper teleskopartig ineinander einführbar sein, wobei insbesondere in der ersten Position das Kontaktelement zu weniger als 20 Prozent, vorzugsweise weniger als 10 Prozent, seiner Ausdehnung in Richtung der Längsachse, von dem Führungskörper umgeben wird oder den Führungskörper umgibt und/oder in der zweiten Position zu mehr als 80 Prozent, insbesondere zu mehr als 90 Prozent, seiner Ausdehnung in Richtung der Längsachse von dem Führungskörper umgeben wird oder den Führungskörper umgibt.

Beispielsweise kann in einer Ausführungsform das Kontaktelement einen Abschnitt mit einem Innengewinde und/oder eine Spindelmutter aufweist. Dabei kann der Abschnitt mit dem Innengewinde und/oder der Spindelmutter derart mit dem Führungskörper zusammenwirken, dass eine Drehbewegung des Abschnitts mit dem Innengewinde und/oder der Spindelmutter gegenüber dem Führungskörper und/oder dem Gehäuse vermieden wird.

Eine Ausführungsform kann dadurch gekennzeichnet sein, dass das Innengewinde und/oder die Spindelmutter an einem Gehäuseseitigen Ende des Kontaktelements angeordnet ist. Somit lässt sich eine möglichst kurze Spindel bei einem möglichst großen Bewegungsspielraum des Kontaktelements realisieren.

In einer Ausführungsform kann die Gewindespindel aus Metall, insbesondere Stahl und/oder Aluminium, hergestellt sein. Dies ermöglicht einen günstigen und genauen Spindelantrieb.

Beispielsweise kann in einer Ausführungsform eine Abschirmung den Führungskörper und/oder das Kontaktelement umgeben, wobei insbesondere die Abschirmung an dem Führungskörper befestigt ist. Dabei kann die Abschirmung, insbesondere deren festkontaktseitiges Ende, vom Gehäuse in Richtung der Längsachse gesehen im Wesentlichen die gleiche Distanz zu dem stationären Kontaktabschnitt aufweisen wie der Führungskörper, insbesondere sein festkontaktseitiges Ende.

Dabei kann die Abschirmung bei Bedarf zeitweise vom elektrischen Potential des Gehäuses trennbar sein, um die Abschirmung als eine Antenne für eine Messung, beispielsweise eine Teilentladungsmessung, zu verwenden. Beispielsweise kann in einer Ausführungsform eine außerhalb des Gehäuses lösbare elektrische Verbindung bereitgestellt werden, um die Abschirmung zeitweise von dem elektrisch auf Masse liegendem Gehäuse zu trennen. Diese elektrische Verbindung weist beispielsweise einen elektrischen Leiter auf, der durch das Gehäuse zu der Abschirmung geführt wird. Zusätzlich kann in einer Ausführungsform der Führungskörper von der Masse für eine Messung, wie eine Teilendladungsmessung, getrennt werden

Somit können mit dem Erdschalter ohne großen Aufwand Teilentladungsmessungen durchgeführt werden. Es braucht daher kein separates Bauelement in einer gasisolierten Schaltanlage. Ferner vereinfacht es der Erdschalter gemäß den Ausführungsformen für einen Servicetechniker, an die Antenne für Teilentladungsmessung heranzukommen, sodass nur ein geringer Aufwand erforderlich ist.

Die Verwendung der Abschirmung als Antenne für Teilentladungsmessung reduziert weiterhin die erforderlichen Bauteile. Beispielsweise kann dabei die Abschirmung über ein Messkabel mit einer Messvorrichtung verbunden werden. Unter Abschirmung wird ein Bauteil verstanden, welches die dielektrische Spannungsfestigkeit bei geringen Abständen der Spannungspotentiale ermöglicht.

Wenn bei einer gasisolierten Mittel- oder Hochspannungsschaltanlage ein erfindungsgemässer Erdschalter eingesetzt wird, verleiht dieser Erdschalter durch seine oben beschriebenen Vorteile und Eigenschaften der Schaltanlage einen Mehrwert.

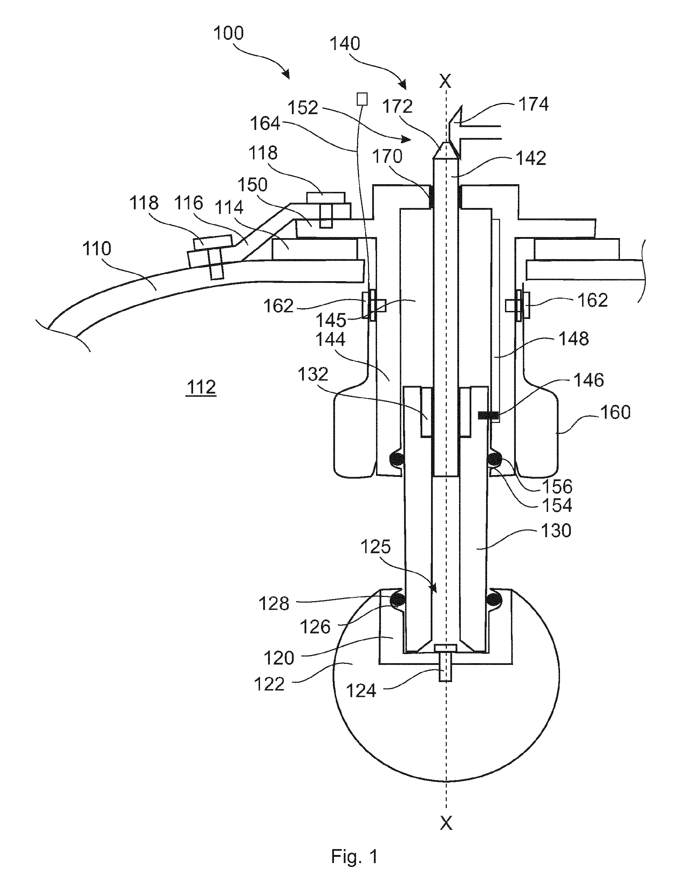

Weitere Merkmale und Vorteile der Erfindung ergeben sich aus den Anspruchskombinationen und der nachstehenden Beschreibung, in der ein Ausführungsbeispiel der Erfindung anhand schematischer Zeichnungen im Einzelnen erläutert wird. Dabei zeigt
Fig. 1 eine Querschnittsansicht eines Erdschalters gemäß einer Ausführungsform.

Fig. 1 zeigt eine Querschnittsansicht einer Ausführungsform eines Erdschalters 100. Auf eine Schraffierung der im Schnitt dargestellten Teile und Elemente wurde zugunsten der Übersichtlichkeit verzichtet. Der Erdschalter 100 ist an einem Gehäuse 110 einer gasisolierten Schaltanlage befestigt. In einer Ausführungsform ist das Gehäuse 110 im Wesentlichen zylindrisch. Im Inneren des Gehäuses 110 ist ein Innenraum 112 angeordnet, der mit einem Isoliergas gefüllt werden kann. Das Gehäuse 110 ist im Betrieb gasdicht, so dass ein Austausch zwischen der den Erdschalter umgebenden Atmosphäre außerhalb des Gehäuses 110 und dem Innenraum 112 vermieden wird. In einer Ausführungsform ist das Gehäuse 110 geerdet oder mit der Masse elektrisch verbunden.

Ferner ist in dem Gasraum oder Innenraum 112 ein Nominalleiter 122 angeordnet, der im Betrieb der gasisolierten Schaltanlage einen Strom leiten kann. In einer Ausführungsform ist der Erdschalter 100 für eine einphasig gekapselte Leitung ausgelegt. Dabei kann das Gehäuse 110 konzentrisch um den Nominalleiter 122 angeordnet sein.

In anderen Ausführungsformen kann der Erdschalter für mehrphasig gekapselte Leitungen ausgelegt sein. Bei mehrphasig gekapselten Leitungen, das heißt bei Leitungen, die mehrere Nominalleiter aufweisen, ist der Nominalleiter 122 nicht konzentrisch zum Gehäuse angeordnet.

In einer Ausführungsform wird der Erdschalter 100 in gasisolierten Schaltanlagen eingesetzt, um den Nominalleiter 122 mit der Erde oder Masse verbinden zu können. Beispielsweise kann an beiden Seiten eines Hochspannungsschalters ein Erdschalter 100 angeordnet werden. Bevor an dem Hochspannungsschalter Arbeiten durchgeführt werden, kann somit an beiden Seiten des Hochspannungsschalters der jeweilige Nominalleiter mit der Erde verbunden werden, so dass keine Lebensgefahr mehr für den Techniker besteht.

Der Nominalleiter 122 weist einen als stationärer Kontaktabschnitt ausgebildeten Festkontakt 120 auf. In einer Ausführungsform ist der Festkontakt mit einer Schraube 124 an dem Nominalleiter befestigt ist. Die Schraube dient zudem zum Zentrieren des Festkontakts 120. In anderen Ausführungsformen kann der Festkontakt 120 mit dem Nominalleiter 122 in Einem ausgeführt sein.

Der Festkontakt 120 weist eine Aufnahme 125, die zur Aufnahme eines festkontaktseitigen Endes eines beweglichen Kontaktelements 130 dient. Die Aufnahme 125 ist in einer Ausführungsform an die äußere Abmessung des festkontaktseitigen Endes des Kontaktelements 130 angepasst. Beispielsweise weist im Falle eines kreiszylindrischen festkontaktseitigen Endes des beweglichen Kontaktelements 130 der Festkontakt 120 eine kreiszylindrische Aufnahme 125 auf oder im Falle eines rechteckigen Querschnitts des festkontaktseitigen Ende des Kontaktelements 130 eine rechteckige beziehungsweise quaderförmige Aufnahme 125 auf. An den parallel zur Bewegungsrichtung des beweglichen Kontaktelements 130 angeordneten Seiten weist die Aufnahme 125 mindestens eine Einbuchtung 126 auf, beispielsweise eine umlaufende, im Falle einer kreiszylindrischen Aufnahme 125 kreisförmige, Einbuchtung 126, die einen Spiralkontakt 128 aufnimmt. Der Spiralkontakt 128 ermöglicht eine gute und sichere elektrische Verbindung zwischen dem Festkontakt 120 und einem in die Aufnahme 125 eingeführten festkontaktseitigen Ende des Kontaktelements 130. In einer anderen Ausführungsform kann eine Einbuchtung und ein in der Einbuchtung angeordneter Spiralkontakt in dem festkontaktseitigen Ende des Kontaktelements 130 angeordnet sein. In anderen Ausführungsformen können auch andere Kontaktglieder anstelle der oder zusätzlich zu den Spiralkontakten, auch den hiernach beschriebenen Spiralkontakten, verwendet werden, beispielsweise Kontaktlamellen, die durch eine Feder vorgespannt sind.

Wie oben beschrieben, weist der Erdschalter 100 das linear bewegliche Kontaktelement 130 auf, das oder dessen festkontaktseitiges Ende in Kontakt mit dem Festkontakt 120 gebracht werden kann. Das linear bewegliche Kontaktelement 130 ist in einer Ausführungsform im Wesentlichen kreiszylindrisch und entlang einer Längsachse X beweglich. In anderen Ausführungsformen kann das Kontaktelement 130 andere Querschnittsformen aufweisen. Das linear bewegliche Kontaktelement 130 konzentrisch zu der Längsachse X angeordnet, ebenso wie die Aufnahme 125 des Festkontakts 120. Die Längsachse X erstreckt sich im Wesentlichen in radialer Richtung des Gehäuses und/oder des Nominalleiters 122.

Das linear bewegliche Kontaktelement 130 wird durch einen Spindelantrieb 140 zwischen einer ersten Position, in der das Kontaktelement 130 den Festkontakt 120 kontaktiert, und einer zweiten Position bewegt, in der das Kontaktelement im Wesentlichen vollständig in einen zylindrischen Führungskörper 144 zurückgezogen ist. Dabei kann in einer Ausführungsform das Kontaktelement, insbesondere deren festkontaktseitiges Ende eine größere Entfernung zum Festkontakt aufweisen als der Führungskörper 144, beziehungsweise dessen festkontaktseitiges Ende. Der Führungskörper ist in einer Öffnung des Gehäuses 110 angeordnet und dichtet diese Öffnung ab.

Der Führungskörper 144 weist in der in Figur 1 gezeigten Ausführungsform eine kreiszylindrische Aussparung 145 auf, in die sich das Kontaktelement 130 zurückziehen kann. Die Aussparung 145 erstreckt sich im Wesentlichen entlang der Längsachse X und ist konzentrisch zu dieser gebildet. Die Aussparung 145 ist an ihrem von dem Festkontakt abgewandten Ende geschlossen. Wenn das Kontaktelement 130 in Ausführungsformen eine andere Querschnittsform hat, kann die Aussparung 145 des Führungskörpers 144 einen entsprechend angepassten Querschnitt aufweisen. Zudem ist die Aussparung des Führungskörpers 144 derart dimensioniert, dass das Kontaktelement 130 gleitend in dem Führungskörper 144 hin und her bewegen werden kann. Der Führungskörper 144 ist derart ausgestaltet, dass er dem Kontaktelement 130 eine lineare Bewegung entlang der Längsachse X beaufschlagt. In einer Ausführungsform können das Kontaktelement und der Führungskörper derart gestaltet sein, dass das Kontaktelement in seinem Inneren den Führungskörper aufnimmt. Das heißt, dass der äußere Durchmesser des Kontaktelements größer wäre als der äußere Durchmesser des Führungskörpers.

Der Führungskörper 144 weist ein erstes Ende auf, das von dem Nominalleiter 122 abgewandt ist. An dem ersten Ende ist ein Flansch 150 angeordnet, der in einer Ausführungsform in Einem mit dem Führungskörper 144 ausgeführt ist, der zur Befestigung des Führungskörpers 144 an dem Gehäuse 110 der gasisolierten Schaltanlage dient. Der Flansch kann auch an einer anderen Position am Gehäuse in Richtung der Längsachse X angeordnet sein. Ferner weist der Führungskörper 144 ein zweites, festkontaktseitiges Ende auf, das dem Nominalleiter 122 zugewandt ist, dem umfangsmäßig auf der Innenseite eine Ausbuchtung 154 angeordnet ist, die einen Spiralkontakt 156 aufnimmt, um eine gute elektrische Leitung zwischen dem Führungskörper 144 und dem Kontaktelement 130 zu ermöglichen. In einer anderen Ausführungsform, können auch mehr als eine Ausbuchtung 154 mit jeweils einem elektrischen Spiralkontakt an dem zweiten, festkontaktseitigen Ende angeordnet sein. In einer anderen Ausführungsform kann das Kontaktelement an seinem gehäuseseitigen oder masseseitigen Ende eine Ausbuchtung für einen Spiralkontakt aufweisen.

Zwischen dem Flansch 150 und dem Gehäuse 110 kann eine Isolierplatte 114 angeordnet werden. Die Isolierplatte 114 ist kostengünstiger herzustellen als ein Erdisolator. Ferner begünstigt eine Isolierlösung mit Isolierplatte 114 eine kompaktere 10kV Isolation (für Tests) als mit Erdisolatoren. Um dann wiederum einen Kontakt zur Erde herzustellen, kann in einer Ausführungsform eine Erdlitze 116 eine lösbare elektrische Verbindung zwischen dem Flansch 150 und dem Gehäuse 110 bereitstellen. Dabei ist die Erdlitze an ihren beiden Enden jeweils mit einer Schraube 118 befestigt.

Zur Antrieb des Kontaktelements 130 wird ein Spindelantrieb 140 mit einer Spindel 142 verwendet, die sich entlang der Längsachse X erstreckt. Die Spindel 142 weist ein erstes Ende auf, das durch ein geschlossenes Ende der Aussparung 145 am ersten Ende des Führungskörpers 144 durchgeführt wird. Dazu weist das erste Ende des Führungskörpers 144 ein Lager 170 auf, das mit entsprechenden Lagerelementen der Spindel 142 zusammenwirkt, sodass ein gasdichter Durchgang der Spindel 142 durch den Führungskörper 144 ermöglicht wird. Somit befindet sich die Spindel 142 teilweise im Innenraum 112 und teilweise außerhalb des Gehäuses 110. Ferner kann die Spindel 142 außerhalb des Gehäuses 110 angetrieben werden.

Der Spindelantrieb 140 weist an dem ersten Ende der Spindel 142 ein Getriebe 152 auf, beispielsweise ein an dem ersten Ende der Spindel 142 befestigtes Kegelrad 172, das mit einem weiteren Kegelrad 174 zusammenwirkt, oder ein an dem ersten Ende der Spindel befestigtes Antriebszahnrad auf. Es können auch in einigen Ausführungsformen andere Getriebe zur Kraftübertragung an die Spindel 142 verwendet werden. Das Kegelrad 172 kann in einem mit der Spindel ausgeführt oder als separates Element an der Spindel befestigt werden. Das festkontaktseitige Ende der Spindel weist in einer Ausführungsform im Wesentlichen die gleiche oder eine größere Entfernung als das festkontaktseitige, zweite Ende des Führungskörpers auf.

Über das Getriebe 152 kann somit die Spindel 142 in eine Drehbewegung um ihre Längsachse X versetzt werden. Die Spindel 142 ist in einer Ausführungsform aus Stahl hergestellt, was eine besonders genaue Bewegung des Kontaktelements 130 ermöglicht. Das Kontaktelement 130 weist an seinem ersten, von dem Nominalleiter 122 entfernten Ende eine Mutter 132 auf, die beispielsweise aus einem nichtleitenden Material hergestellt ist. In einer anderen Ausführungsform kann die Mutter auch in dem Kontaktelement 130 integriert sein und einstückig mit demselben ausgeführt sein. Die Mutter 132 wirkt mit dem Gewinde der Spindel 142 zusammen, sodass eine Drehbewegung der Spindel 142 um ihre Längsachse eine lineare Bewegung des Kontaktelements 130 in Richtung der Längsachse X ermöglicht. Somit kann über eine Drehbewegung das Kontaktelement 130 zwischen der ersten Position, in der sich das Kontaktelement in dem Führungskörper 144 angeordnet ist, und der zweiten Position mittels einer einfachen Drehbewegung bewegt werden. Um eine Drehung des Kontaktelements 130 relativ zu dem Führungskörper 144 zu verhindern, ist ein Stift 146 an der Außenseite des Kontaktelements 130 angebracht, insbesondere an dem zweiten Ende desselben. Der Stift 146 ragt aus der zylindrischen Oberfläche des Kontaktelements 130 hervor und wirkt mit einer in dem Führungskörper 144 angeordneten Nut 148, die insbesondere in parallel zur Längsachse X angeordnet ist, zusammen.

Wie der Fig. 1 entnommen werden kann, stellt der Führungskörper 144 einen Abschnitt des Gehäuses dar und ermöglicht gleichzeitig eine gezielte Führung des Kontaktelements 130 in einer linearen Bewegung. Somit ist der Erdschalter 100 einfach auszutauschen und/oder zu reparieren.

Eine Abschirmung 160, die im Wesentlichen zylinderförmig ist, umgibt den Führungskörper 144 im Wesentlichen vollständig, insbesondere den Abschnitt, der in den Innenraum 112 hineinragt. Die Abschirmung dient dazu, das elektrische Feld im bestimmten Rahmen zu halten, da sich der Führungskörper 144 in Richtung des Nominalleiters 122 radial von der Innenwand des Gehäuses 110 aus erstreckt. Die Abschirmung 160 ist an ihrem von dem Nominalleiter entfernten beziehungsweise gehäuseseitigen Ende mittels Schrauben 162 an dem Führungskörper 144 befestigt. Dabei kann die Abschirmung 160 von dem Führungskörper 144 elektrisch isoliert werden. Ferner ist ein elektrischer Leiter 164 mit der Abschirmung verbunden, der durch das Gehäuse hindurchgeführt wird, um zeitweise mit Erdpotential und/oder zweitweise mit einem Messgerät verbunden zu werden. Im normalen Betriebsfall ist die Abschirmung 160 mit der Erde elektrisch verbunden. Jedoch kann die Abschirmung 160 wahlweise auch von der Erde getrennt werden, um Teilentladungsmessungen durchzuführen. Dann wird die Abschirmung 160 als Antenne verwendet und der elektrische Leiter 164 mit einem entsprechenden Messgerät verbunden. Zudem wird dann die elektrische Verbindung in Form der Erdlitze 116 zwischen dem Führungskörper 144, der einstückig mit dem Flansch 150 ausgeführt ist, und dem Gehäuse 110 unterbrochen, indem beispielsweise die Erdlitze 116 entfernt wird. Folglich hat der Erdschalter in diesem Zustand ein elektrisch floatendes Potenzial. Somit kann mit einem geringen Aufwand eine Teilentladungsmessung an dem Erdschalter gemäß der Erfindung durchgeführt werden.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Erdschalter (100) für eine gasisolierte Mittel- oder Hochspannungsschaltanlage umfassend:
ein Gehäuse (110), welches ein Innenvolumen (112) definiert;
einen Nominalleiter (122) , der einen stationären Kontaktabschnitt (120), aufweist;
ein in dem Innenvolumen beweglich angeordnetes Kontaktelement (130), welches derart mit dem Gehäuse (110) verbindbar ist, dass das bewegliche Kontaktelement (130) in eingeschaltetem Zustand des Erdschalters auf demselben elektrischen Potential liegt, wie das Gehäuse (110) und der stationäre Kontaktabschnitt (120), und
einen Spindelantrieb (140), der eine mit dem Kontaktelement (130) zusammenwirkende Gewindespindel (142) aus Metall umfasst, um das Kontaktelement in Richtung einer Längsachse (X) zwischen einer ersten Position, in der das bewegliche Kontaktelement den stationären Kontaktabschnitt (120) elektrisch kontaktiert, und einer zweiten Position zu bewegen, in der das bewegliche Kontaktelement entfernt von dem stationären Kontaktabschnitt (120) angeordnet ist.

2. Erdschalter nach Anspruch 1, wobei
der Spindelantrieb einen Führungskörper (144) aufweist, der mit dem Kontaktelement (130) derart zusammenwirkt, dass eine Drehbewegung des Kontaktelements vermieden wird, insbesondere über eine Nut-Stift-Anordnung (146, 148), wobei vorzugsweise der Führungskörper die Nut (148) aufweist.

3. Erdschalter nach Anspruch 2, wobei
der Führungskörper (144) ortsfest angeordnet ist und/oder in eingeschaltetem Zustand des Erdschalters auf das elektrische Potential des Gehäuses (110) bringbar ist.

4. Erdschalter nach Anspruch 2 oder 3, wobei
der Führungskörper (144) an einem Abschnitt des Gehäuses (110) fixiert ist und/oder einen Abschnitt des Gehäuses bereitstellt.

5. Erdschalter nach Anspruch 4, wobei
der Führungskörper eine Befestigungsfläche (150), insbesondere in Form eines Befestigungsflansches, aufweist, wobei zwischen der Befestigungsfläche und dem Abschnitt des Gehäuses eine Isolierschicht (114) angeordnet ist.

6. Erdschalter nach einem der vorangehenden Ansprüche, wobei
der Spindelantrieb (140) teilweise außerhalb des Innenvolumens angeordnet ist.

7. Erdschalter nach Anspruch 6, wobei
der Spindelantrieb ein Getriebe (152) aufweist, wobei das Getriebe außerhalb des Innenvolumens (112) angeordnet ist.

8. Erdschalter nach einem der vorangehenden Ansprüche, wobei
der Führungskörper (144) und/oder das Kontaktelement (130) die Gewindespindel (142) umgeben, insbesondere zylinderförmig umgeben.

9. Erdschalter nach einem der vorangehenden Ansprüche, wobei das Kontaktelement und der Führungskörper teleskopartig ineinander einführbar sind, wobei insbesondere
in der ersten Position das Kontaktelement zu weniger als 20 Prozent, vorzugsweise weniger als 10 Prozent, seiner Ausdehnung in Richtung der Längsachse, von dem Führungskörper umgeben wird oder den Führungskörper umgibt und/oder in der zweiten Position zu mehr als 80 Prozent, insbesondere zu mehr als 90 Prozent, seiner Ausdehnung in Richtung der Längsachse von dem Führungskörper umgeben wird oder den Führungskörper umgibt.

10. Erdschalter nach einem der vorangehenden Ansprüche, wobei
das Kontaktelement (130) einen Abschnitt mit einem Innengewinde und/oder eine Spindelmutter (132) aufweist.

11. Erdschalter nach Anspruch 10, wobei
der Abschnitt mit dem Innengewinde und/oder die Spindelmutter (132) derart mit dem Führungskörper (144) zusammenwirkt, dass eine Drehbewegung des Abschnitts mit dem Innengewinde und/oder der Spindelmutter vermieden wird.

12. Erdschalter nach Anspruch 10 oder 11, wobei das Innengewinde und/oder die Spindelmutter (132) an einem gehäuseseitigen Ende (134) des Kontaktelements (130) angeordnet ist.

13. Erdschalter nach einem der vorangehenden Ansprüche, wobei
eine Abschirmung (160) den Führungskörper und/oder das Kontaktelement umgibt, wobei insbesondere die Abschirmung an dem Führungskörper (144) befestigt ist.

14. Erdschalter nach Anspruch 13, wobei
die Abschirmung zeitweise vom elektrischen Potential des Gehäuses (110) trennbar ist, so dass die Abschirmung als Antenne für Teilentladungsmessungen verwendbar ist.

15. Gasisolierte Mittel- oder Hochspannungsschaltanlage, umfassend einen Erdschalter gemäß einem der vorangegangenen Ansprüche.
